# FASCICULE DE BREVET EUROPEEN

(11) **EP 2 553 906 B1**
(45) Date de publication et mention de la délivrance du brevet: **19.08.2020**
(21) Numéro de dépôt: 11730346.1
(22) Date de dépôt: 01.04.2011
(51) Int. Cl.: H04L 29/08, G06Q 30/00

(54) **PROCÉDÉ D'ACQUISITION PAR UN TERMINAL MOBILE D'INFORMATIONS COMPLÉMENTAIRES LIÉES À AU MOINS UNE AFFICHE PRÉSENTE SUR UN PANNEAU D'AFFICHAGE**
VERFAHREN ZUR ERFASSUNG DURCH MOBILES ENDGERÄT VON ZUSATZINFORMATIONEN IM ZUSAMMENHANG MIT MINDESTENS EINEM, AUF EINER ANZEIGETAFEL VORHANDENEN PLAKAT
METHOD OF ACQUISITION BY A MOBILE TERMINAL OF COMPLEMENTARY INFORMATION RELATED TO AT LEAST ONE POSTER PRESENT ON A DISPLAY PANEL

(30) Priorité: 01.04.2010 FR 1052451
(43) Date de publication de la demande: 06.02.2013
(73) Titulaire: Gonzalez, Jérôme, 75010 Paris (FR); Libault, David, 75003 Paris (FR); Lewiner, Jacques, 92210 Saint-Cloud (FR)
(72) Inventeur: Gonzalez, Jérôme, 75010 Paris (FR); Libault, David, 75003 Paris (FR); Lewiner, Jacques, 92210 Saint-Cloud (FR)
(74) Mandataire: A.P.I. Conseil
(86) Numéro de dépôt international: PCT/FR2011/000196
(87) Numéro de publication internationale: WO 2011/121194

(56) Documents cités:
- EP-A1- 1 587 014
- EP-A1- 2 026 275
- US-A1- 2002 116 268
- US-B1- 6 549 625

## Description

La présente invention concerne un procédé d'acquisition par un terminal mobile situé à proximité d'un panneau d'affichage, d'informations complémentaires liées à au moins une affiche présente sur le panneau d'affichage.

Les panneaux d'affichage publicitaire sont des supports de communication qui permettent d'adresser un message aux consommateurs de passage devant ce support. Ils sont disposés en extérieur ou en intérieur et permettent de présenter un produit ou un service à des consommateurs.

Le document de l'art antérieur EP2026275 décrit un procédé similaire pour utiliser une information fournie par un capteur, à partir d'une entité multimédia, pour récupérer par un dispositif mobile un canal de publicité.

Un autre document de l'art antérieur EP1587014 décrit un procédé facilitant une transaction entre un utilisateur de téléphone avec appareil photo et une entité commerciale, impliquant la lecture d'un code à barres et établissant une communication avec l'entité commerciale pour une transaction.

Cette présentation du produit ou des services sur le panneau d'affichage peut se faire par exemple par l'intermédiaire d'une affiche papier ou polymère disposée sur le panneau d'affichage éventuellement éclairé ou rétro éclairé ou d'un écran plasma ou LCD ou d'un afficheur à encre électronique.

L'invention concerne un procédé et un dispositif fournissant un service de consultation d'informations complémentaires à un consommateur situé devant un panneau d'affichage lui permettant d'obtenir de manière rapide et simple des informations complémentaires sur le produit ou les services présentés sur ce panneau.

Différents procédés ou dispositifs ont été proposés pour permettre un tel service. Par exemple, on présente sur une affiche un produit et on indique également des numéros de téléphone ou des adresses de distributeurs ou de magasins où il est possible de se les procurer.

Ce procédé très simple est toutefois peu pratique car les distributeurs ou magasins indiqués peuvent être situés loin du panneau d'affichage.

Pour remédier à cet inconvénient, il a été proposé par exemple d'ajouter un bandeau indiquant les magasins ou les prestataires de service proches, ce qui, là encore, est très peu pratique, non pas pour le consommateur mais pour le gestionnaire des panneaux publicitaires qui se trouve obligé de personnaliser chaque affiche en fonction de l'endroit où elle est placée. De plus, un tel procédé présente l'inconvénient de nuire à l'esthétique de l'affiche ce qui est très gênant compte tenu des efforts considérables déployés pour créer de belles affiches.

Dans un autre système de l'art antérieur (par exemple EP 2 026 275 A1 et EP 1 587 014 A1), il a été proposé d'imprimer sur les affiches elles-mêmes un code optique reconnaissable par un logiciel spécialisé. Le consommateur intéressé par le produit présenté sur l'affiche utilise par exemple son téléphone mobile en mode photo pour saisir le code optique de l'affiche. Pour chercher des informations complémentaires le consommateur est connecté à un serveur soit de manière indirecte soit de manière directe par utilisation d'une URL associée au produit objet de l'affiche et accéder ainsi à des informations complémentaires sur ce produit.

Toutefois cette méthode présente l'inconvénient que le code optique ajouté ne correspond pas nécessairement à la charte graphique utilisée dans l'affiche et peut ainsi compromettre son intégrité esthétique. De plus, l'affiche disposée sur différents panneaux étant toujours la même, il est impossible d'identifier le panneau sur lequel le consommateur a vu l'affiche lorsqu'il récupère les informations complémentaires correspondantes.

De plus, pour accéder aux informations complémentaires, le consommateur doit prendre le code optique en photo avec un téléphone mobile équipé d'un appareil photo, transmettre cette image par MMS à un serveur distant qui reconnaît le code, serveur qui renvoie par SMS à l'utilisateur l'URL correspondante. A l'aide du navigateur de son téléphone mobile, le consommateur peut enfin télécharger et consulter les informations complémentaires à partir de l'URL reçue dans le message SMS.

Dans un autre procédé proposé, le consommateur télécharge une application, l'installe sur son téléphone mobile puis il lance cette application qui, par l'intermédiaire du mode photo de son téléphone mobile, récupère l'image du code optique puis l'analyse. Cette analyse révèle l'URL soit directement si elle est encodée par le code optique, soit par l'intermédiaire d'un serveur distant auquel l'application se connecte par l'intermédiaire du réseau téléphonique mobile. Le serveur renvoie à l'application l'URL correspondant à la donnée encodée par le code optique. L'application peut ensuite ouvrir le navigateur du téléphone mobile qui va alors télécharger les informations complémentaires à partir de l'URL reçue.

Dans un autre procédé proposé, les informations complémentaires sont envoyées au consommateur sur son téléphone mobile par l'intermédiaire du panneau d'affichage publicitaire équipé d'un émetteur radio qui détecte et établit la communication avec les téléphones mobiles équipés d'un lien radio, Bluetooth ou Wifi par exemple. Toutefois chaque panneau a besoin d'une capacité de stockage important pour stocker toutes les informations complémentaires. De plus chaque panneau d'affichage devrait stocker des données personnalisées dudit panneau. Par conséquent il est nécessaire de mettre à jour chaque panneau avec des données différentes. Ce procédé présente en outre un caractère intrusif gênant pouvant entraîner une violation de la vie privée puisque le téléchargement des données complémentaires peut se faire automatiquement lorsqu'un terminal mobile se trouve à proximité du panneau d'affichage.

Dans un autre système de l'art antérieur (par exemple US 2002/0116268 A1), il est proposé d'utiliser une étiquette de type RFID apposée sur l'affiche publicitaire pour permettre à un terminal mobile de récupérer l'URL permettant d'accéder aux informations complémentaires. Ce système présente l'inconvénient que toutes les affiches d'une certaine information ayant le même RFID, il n'est pas possible pour le terminal mobile d'avoir une information sur le panneau d'affichage sur lequel elle est installée, ce qui limite l'information complémentaire qui peut être fournie.

Afin de remédier à cet inconvénient, il a également été proposé dans l'art antérieur (US 6 549 625 B1), de prévoir un transmetteur d'ondes électromagnétiques (optique ou radio par exemple) à proximité du panneau et contenant l'information de position. Un terminal mobile, situé dans le périmètre couvert par le transmetteur d'ondes électromagnétiques et équipé pour pouvoir recevoir le signal électromagnétique, est susceptible de récupérer cette information de position et de la transmettre vers un système central susceptible d'identifier l'information affichée sur le panneau et donc de renvoyer vers le terminal mobile des informations complémentaires.

Toutefois, ce système présente plusieurs graves inconvénients. En effet, le dit transmetteur électromagnétique qui émet des ondes électromagnétiques, consomme de l'énergie ; si plusieurs panneaux sont situés à des distances voisines les unes des autres, il y a des risques d'interférence entre ces ondes et une multiplication des risques de collision des messages ; enfin, le terminal mobile pénétrant le périmètre de couverture, peut être activé par les dites ondes électromagnétiques, ce qui génère de la consommation électrique dans les terminaux mobiles, consommation très gênante car la durée de vie d'une charge de la batterie est un paramètre crucial pour l'utilisateur du terminal mobile.

Dans ces différents procédés de l'art antérieur le processus d'accès aux informations complémentaires est nuisible à l'esthétique de l'affiche, à la liberté du consommateur, à la durée de vie de la charge de la batterie du terminal mobile.

L'invention dans au moins un mode de réalisation a pour objectif de pallier les différents inconvénients de l'état de la technique et d'apporter des améliorations.

Un premier aspect de l'invention propose à cet effet un procédé d'acquisition par un terminal mobile situé à proximité d'un panneau d'affichage, des informations complémentaires liées à au moins une affiche présente sur le panneau d'affichage, le procédé comprenant les étapes suivantes :acquisition des données d'identification permettant d'identifier le panneau d'affichage, transmission des données d'identification vers un service de traitement au moyen d'un réseau de communication ; et réception, en provenance du service de traitement, des informations complémentaires relatives à l'affiche présentée sur le panneau d'affichage identifié par le service de traitement à partir des données d'identification,

Dans un mode de réalisation de l'invention les données d'identification peuvent être récupérées directement du panneau d'affichage en établissant un lien de communication sans fil entre le terminal mobile et le panneau d'affichage. Dans un autre mode de réalisation les données d'identification peuvent être récupérées à partir des données géographiques du terminal mobile. Dans un autre mode encore les données d'identification peuvent être récupérées du panneau d'affichage au moyen d'une capture d'image ou par saisie d'information au moyen du clavier du terminal mobile, par exemple.

Un deuxième aspect de l'invention propose un procédé de diffusion vers un terminal mobile des informations complémentaires liées à au moins une affiche présente sur un panneau d'affichage, le procédé comprenant les étapes suivantes :réception en provenance d'un terminal mobile, au moyen d'un réseau de communication, des données d'identification permettant d'identifier un panneau d'affichage ; identification dudit panneau d'affichage à partir des données d'identification ; localisation du panneau d'affichage et identification de l'affiche présentée sur le panneau d'affichage ; récupération des informations complémentaires relatives à l'affiche présentée sur le panneau d'affichage identifié ; et transmission des informations complémentaires vers le terminal mobile.

De façon avantageuse les informations complémentaires peuvent être relatives à la localisation géographique dudit panneau d'affichage ;

Le procédé peut comporter en outre une étape de mémorisation des données d'identification relatives à une pluralité de panneaux d'affichage, et pour chaque panneau d'affichage une étape de mémorisation des données de position géographique du panneau d'affichage et des données d'identification de l'affiche présente sur le panneau d'affichage respectif permettant de récupérer les informations complémentaires correspondantes.

Le procédé peut comporter en outre une étape de personnalisation des informations complémentaires à partir des données d'identification du panneau d'affichage et le cas échéant des données de position géographique du panneau d'affichage

Dans un mode de réalisation les informations complémentaires peuvent être mises à jour lorsque l'affiche du panneau est modifiée ou remplacée.

Un troisième aspect de l'invention propose un système de diffusion des données complémentaires liées à au moins une affiche présente sur un panneau d'affichage vers un terminal mobile, le système comprenant :des moyens de réception, en provenance, d'un terminal mobile, à l'aide d'un réseau de communication, des données d'identification permettant d'identifier un panneau d'affichage; des moyens d'identification dudit panneau d'affichage à partir des données d'identification ;des moyens d'identification de la localisation du panneau d'affichage et de l'affiche présente sur le panneau d'affichage ;des moyens de récupération des informations complémentaires relatives à l'affiche présentée sur le panneau d'affichage identifié ; des moyens de transmission des informations complémentaires vers le terminal mobile.

Dans un mode de réalisation les informations complémentaires peuvent être relatives à la localisation géographique dudit panneau d'affichage.

Dans un mode de réalisation le système de diffusion peut comporter un centre d'exploitation comportant des moyens de mémorisation des données d'identification relatives à une pluralité de panneaux d'affichage, ainsi que pour chaque panneau d'affichage, des données de position géographique du panneau d'affichage et des données d'identification de l'affiche ou des affiches présentées sur le panneau d'affichage respectif permettant de récupérer les informations complémentaires correspondantes; et un centre de service comportant des moyens de mémorisation des informations complémentaires et des moyens de diffusion des informations complémentaires vers le terminal mobile, le centre d'exploitation et le centre de service étant interconnectés au moyen d'un réseau de communication.

Les données peuvent être échangées entre le centre de service et le centre d'exploitation par échange de fichiers XML, par exemple au format SOAP.

Un quatrième aspect de l'invention propose un panneau d'affichage comportant un élément d'identification, des données d'identifications représentatives de l'élément d'identification étant récupérables par un terminal mobile situé à proximité du panneau et permettant d'identifier le panneau d'affichage, la localisation géographique du panneau d'affichage ainsi que l'affiche ou les affiches présentées sur le panneau d'affichage.

Le panneau d'affichage peut comporter en outre des moyens de transmission des données représentatives de l'élément d'identification vers un terminal mobile au moyen d'un lien de communication sans fil.

Un cinquième aspect de l'invention propose un terminal mobile comprenant :des moyens d'acquisition des données d'identification permettant d'identifier un panneau d'affichage situé à proximité du terminal mobile , des moyens de transmission des données d'identification vers un service de traitement au moyen d'un réseau de communication ; et des moyens de réception, en provenance du service de traitement, des informations complémentaires relatives à une affiche ou aux affiches présentées sur le panneau d'affichage identifié par le service de traitement à partir des données d'identification, et le cas échéant à la localisation géographique dudit panneau d'affichage.

Ainsi un consommateur situé devant un panneau peut obtenir de manière rapide et simple des informations complémentaires sur le produit ou les services présentés sur ce panneau.

Dans un mode de réalisation, les données d'identification une fois saisies par le terminal mobile peuvent être mémorisées dans le terminal.

Chaque aspect de la présente invention propose un programme informatique pour la mise en œuvre d'au moins une partie du procédé correspondant décrit ci-avant. Un tel programme peut être téléchargeable via un réseau de télécommunication et/ou stocké dans une mémoire d'un dispositif de traitement et/ou stocké sur un support mémoire destiné à coopérer avec un dispositif de traitement.

### Description des figures

D'autres caractéristiques et avantages de l'invention apparaîtront à la lecture de la description détaillée ci-après d'un exemple de réalisation à titre d'illustration non limitative, et faite en référence des dessins annexés sur lesquels :
- la figure 1 illustre schématiquement un système pour obtenir des informations complémentaires liées à une affiche présente sur un panneau d'affichage selon au moins un mode de réalisation de l'invention ;
- la figure 2 illustre les étapes d'un procédé d'acquisition des informations complémentaires liées à une affiche présente sur un panneau d'affichage selon au moins un mode de réalisation de l'invention ;

### Description Détaillée

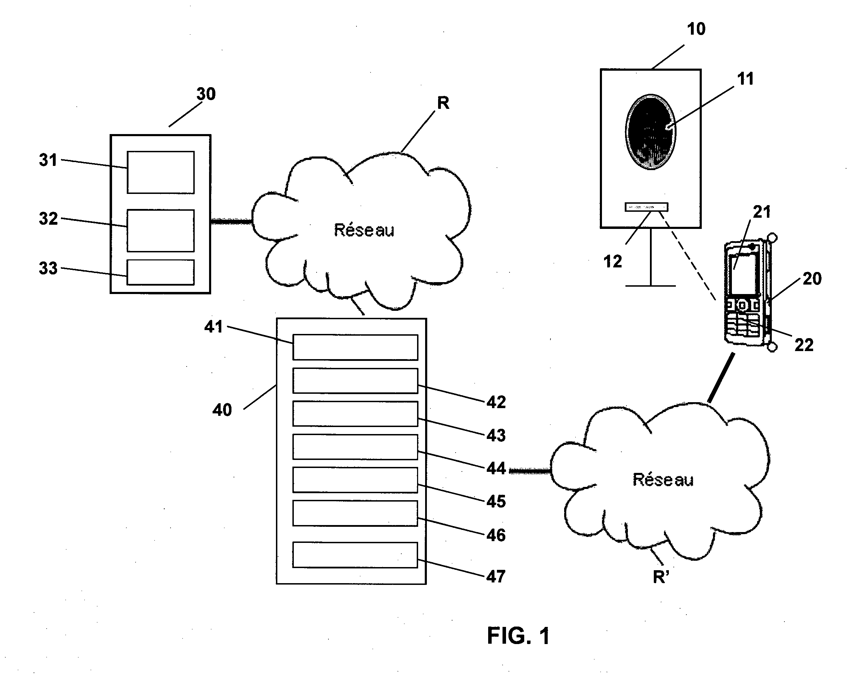

La figure 1 illustre schématiquement un système selon un premier mode de réalisation de l'invention permettant à un terminal mobile d'obtenir des informations complémentaires liées à une affiche présente sur un panneau d'affichage publicitaire. Les modules représentés sur la figure sont des unités fonctionnelles, qui peuvent ou non correspondre à des unités physiquement distinguables. Par exemple, ces modules ou certains d'entre eux peuvent être regroupés dans un unique composant, ou constituer des fonctionnalités d'un même logiciel. A contrario, certains modules peuvent éventuellement être composés d'entités physiques séparées.

Le système comprend un panneau d'affichage 10 auquel est fixée une affiche 11 qui présente un produit ou un service à des consommateurs. Le panneau d'affichage 10 comprend en outre un élément d'identification 12 qui fournit à un terminal mobile 20 des données d'identification permettant d'identifier le panneau d'affichage 10.

L'élément d'identification 12 du panneau d'affichage 10 peut être présenté par tout moyen permettant sa visualisation directe par le consommateur. Il peut être imprimé directement sur le corps du panneau 10, ou affiché par l'intermédiaire d'un écran d'affichage variable utilisant la technologie LCD, plasma, LEDs ou encre électronique par exemple. L'élément d'identification 12 peut être présenté sous forme d'un code, d'une image ou du texte par exemple.

Dans ce mode de réalisation les données représentatives de l'élément d'identification 12 sont une photographie de l'élément d'identification 12.

Le système comprend en outre un centre d'exploitation 30 dans lequel des moyens de mémorisation 31 sont prévus, ces moyens de mémorisation 31 contenant des données représentatives des différents éléments d'identification 12 des panneaux 10 ainsi que la position géographique de chaque panneau 10 et l'identifiant de la ou des affiches présentées sur le panneau associé 10. L'opérateur des panneaux d'affichage est en charge d'actualiser les moyens de mémorisation du centre d'exploitation 30 lorsque des panneaux d'affichage sont ajoutés, des panneaux d'affichage sont enlevés ou des affiches de panneaux d'affichage sont modifiées.

Le centre d'exploitation 30 est lié par l'intermédiaire d'un réseau R tel qu'un réseau Internet privé par exemple à au moins un centre de service 40 dans lequel des moyens de mémorisation et de diffusion des informations complémentaires relatives à l'affiche du panneau d'affichage 10 sont prévus.

Le centre d'exploitation 30 comporte en outre des moyens automatiques de réception 32 d'éléments d'identification 12 des panneaux 10 et des moyens automatiques d'envoi 33 de l'identifiant de la ou des affiches 11 présentées sur le panneau d'affichage 10 et de la position géographique du panneau d'affichage 10 à partir de l'élément d'identification 12.

Le centre de service 40 comporte :
des moyens automatiques 42 de réception de données, représentatives de l'élément d'identification 12, transmises par le terminal mobile 20, et des moyens de traitement 43 pour extraire l'élément d'identification à partir des données représentatives reçues,
des moyens automatiques d'émission 44 des éléments d'identification extraits vers le centre d'exploitation 30,
des moyens automatiques d'émission 45 des informations complémentaires vers le terminal mobile 20
des moyens automatiques de réception 46 de l'identifiant de la ou des affiches et de la position géographique d'un panneau d'affichage 10,
des moyens de personnalisation 47 des informations complémentaires à partir de l'identifiant de la ou des affiches 11 et de la position géographique reçus par les moyens de réception.

Les moyens de mémorisation du centre de service 40 ou de centre d'exploitation30 peuvent être un serveur contenant une base de données intégrant les informations décrites. Le serveur peut implémenter un service d'interrogation de cette base de données à l'aide d'un « Web Service ». On pourra avantageusement utiliser le langage WXML pour décrire ce service qui sera implémenté par échange de fichiers XML au format SOAP entre le centre de service 40 et le centre d'exploitation 30.

Le terminal mobile 20 peut être un téléphone portable, un PDA, un ordinateur portable etc. comportant des moyens de saisie d'information tels qu'un clavier 21 ou une interface tactile, d'un écran 22 et des moyens de calcul, et des moyens pour émettre et recevoir des données, en particulier émettre des données représentatives de l'élément d'identification, par l'intermédiaire de la connexion à un réseau R' de télécommunication public tel qu'un réseau GSM 3G par exemple. Le terminal mobile 20 est agencé pour recevoir et présenter les informations complémentaires sur l'écran 22 à partir des données reçues du ou des centres de service 40.

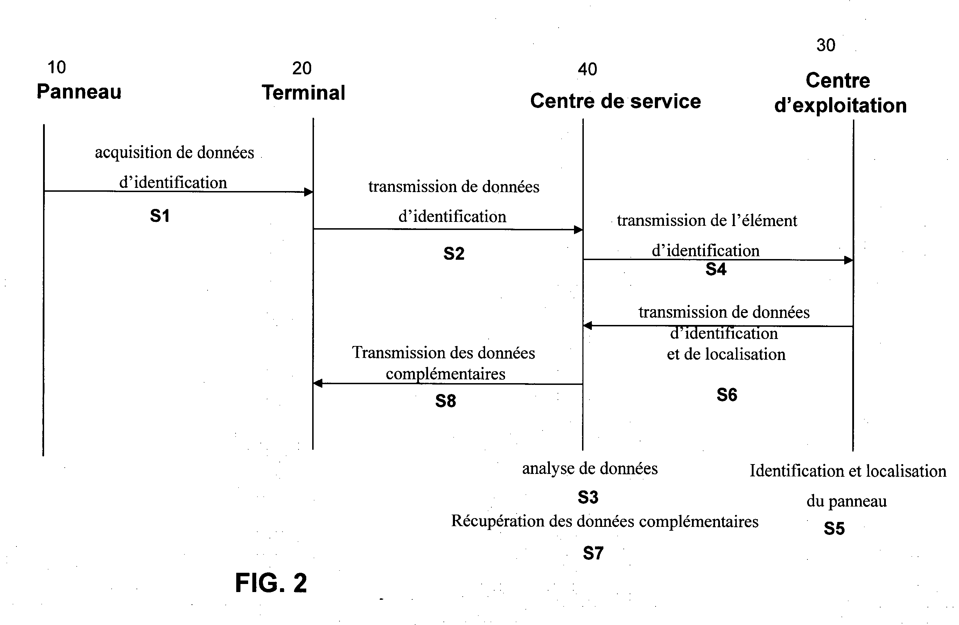

On se réfère maintenant à la figure 2 sur laquelle sont illustrés les échanges de données entre les différentes entités du système illustré sur la figure 1 pour communiquer des informations complémentaires à un utilisateur du terminal mobile 20 sur un produit ou des services présentés sur une affiche placée 11 dans un panneau d'affichage 10 selon le premier mode de réalisation de l'invention.

L'utilisateur du terminal 20 passe devant le panneau d'affichage 10 sur lequel est présentée l'affiche 11. L'affiche 11 présente des informations sur un produit auquel l'utilisateur s'intéresse et au sujet duquel il souhaite avoir des informations complémentaires, telles que par exemple le prix du produit, les magasins à proximité qui vendent ce produit etc. Dans une première étape du procédé l'utilisateur du terminal mobile 20 se place à proximité du panneau d'affichage 10 pour récupérer des données d'identification permettant d'identifier le panneau d'affichage 10.

Au cours d'une étape S1 d'acquisition de données d'identification, les données d'identification représentatives de l'élément d'identification 12 du panneau d'affichage 10 sont récupérées du panneau d'affichage 10 sous forme d'une photographie de l'élément d'identification 12 au moyen d'une capture d'image.

On peut, dans une variante, disposer dans le terminal mobile d'une mémoire afin d'y conserver les données d'identification une fois saisies par le terminal mobile, de telle sorte que l'utilisateur puisse transmettre au centre d'exploitation les données d'identification afin d'accéder aux informations complémentaires, même s'il se trouve éloigné du panneau d'affichage, par exemple si il se était en mouvement lors du passage devant le panneau d'affichage.

S'ensuit une étape S2 de transmission de données d'identification du terminal mobile 20 directement vers le centre de service 40 par l'intermédiaire d'un réseau de télécommunication publique R'. Après réception des données d'identification, dans une étape d'analyse de données S3, les données représentatives sont traitées afin d'en extraire l'élément d'identification 12 du panneau d'affichage 10. Puis dans une étape S4 l'élément d'identification 12 extrait est envoyé du centre de service 40 vers le centre d'exploitation 30.

Bien entendu dans une variante l'analyse des données représentatives pour en extraire l'élément d'identification peut avoir lieu dans le centre d'exploitation 30.

Dans une étape S5 le centre d'exploitation 30 utilise l'élément d'identification 12 pour identifier le panneau d'affichage 10 et obtenir des coordonnées géographique du panneau d'affichage 10.

Au cours d'une étape S6, le centre d'exploitation 30 transmet vers le centre de service 40 l'identifiant de l'affiche 11 (ou des affiches) du panneau d'affichage correspondant à l'élément d'identification 12 et les coordonnées géographiques du panneau d'affichage 10 correspondant à l'élément d'identification 12 .

Dans une étape S7 le centre de service 40 récupère des données complémentaires relatives à l'affiche 11 présentée sur le panneau d'affichage 10 identifié et relatives à la localisation géographique du panneau d'affichage.

S'ensuit une étape S8 de dialogue entre le terminal mobile 20 et le centre de service 40 fournissant au consommateur des informations complémentaires sur le produit ou les services présentés sur l'affiche 11 identifiée, ainsi que des informations spécifiques à la localisation géographique du panneau d'affichage 10.

Le consommateur peut utiliser le terminal mobile 20 pour recevoir les informations complémentaires par l'intermédiaire du réseau Internet. Pour se raccorder au réseau internet, une technologie wifi éventuellement intégrée au terminal mobile peut être utilisée si un point d'accès est à sa portée, ou un modem 3G intégré au terminal mobile ou à une clef USB connectée au terminal mobile.

Le centre de service peut être implémenté à l'aide d'un serveur web. Si l'élément d'identification 12 du panneau 10 est Y, le panneau d'affichage 10 peut intégrer une mention du type « Pour en savoir plus rendez-vous sur http://www.abcdef.com/Y ». Le site www.abcdef.com peut directement contenir les informations spécifiques ou effecteur une redirection automatique vers un site contenant les informations spécifiques au produit ou au service annoncé sur l'affiche 11, en transmettant les coordonnées géographiques du panneau 10 identifié.

Des modes de réalisation de l'invention concernent un procédé et un dispositif fournissant un service de consultation d'informations complémentaires à un consommateur situé devant un panneau d'affichage lui permettant d'obtenir de manière rapide et simple des informations complémentaires sur le produit ou les services présentés sur ce panneau.

En somme lorsque le consommateur accède au centre de service 40 par l'intermédiaire d'un réseau public R', le panneau d'affichage 10 sur lequel il a vu une affiche 11 est identifié. Le centre de service 40 peut interroger le centre d'exploitation 30 et récupérer la localisation géographique du panneau d'affichage (et donc du consommateur) ainsi que l'affiche présente sur le panneau d'affichage grâce à l'élément d'identification du panneau d'affichage, et aux informations stockés dans les moyens de mémorisation du centre d'exploitation. Ainsi les informations présentées au consommateur sont cohérentes avec l'affichage vu ainsi que sa localisation géographique.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

En variantes par exemple l'élément d'identification pourra être déduit de la géo localisation du terminal mobile 10. Dans ce cas les données de géo localisation obtenues par exemple par moyen d'un module de géo localisation installé sur le terminal, peuvent être transmises du terminal mobile 20 vers le centre de service 40.

Dans d'autres variantes le ou les centres de services 40 et le centre d'exploitation 30 peuvent, dans certains cas, constituer un seul et unique centre et/ou un seul serveur. Dans ce cas, les moyens d'émission et de réception d'un centre vers l'autre et vice versa ne sont pas nécessaires et le centre de service a accès directement aux données de localisation et d'affichage des panneaux.

Dans d'autre variantes le réseau R qui fait la liaison entre le centre d'exploitation et le centre de service peut être le même réseau R' qui fait la liaison entre le terminal mobile et le centre de service. Ce réseau peut être un réseau Internet par exemple.

Dans des modes de réalisation des données représentatives de l'élément d'identification permettant d'extraire l'élément d'identification peuvent être traitées afin d'extraire l'élément d'identification soit au niveau du dispositif électronique portable, soit au niveau du ou des centres de services, soit au niveau du centre d'exploitation.

Dans des variantes de l'invention les données représentatives de l'élément d'identification peuvent être une chaîne de caractères entrée par l'utilisateur sur le clavier de son téléphone portable ou de son ordinateur. Dans d'autres modes de réalisation des données d'identification du panneau peuvent être transmises du panneau au terminal par l'intermédiaire d'une liaison sans fil telle que une liaison radio ou une liaison infrarouge par exemple.

Dans des modes de réalisation l'élément d'identification du panneau peut comprendre un texte court indiquant au consommateur le processus d'accès aux informations relatives à l'affiche. Si le service est basé sur la visiotéléphonie sur les réseaux 3G, le consommateur utilisera son téléphone mobile 3G pour recevoir les informations complémentaires. Si le numéro d'appel du service est X et que l'identifiant du panneau est Y, l'élément d'identification du panneau d'affichage peut consister en la mention « Pour plus d'information appelez le X en visio et tapez Y». Le numéro X étant le même pour tous les panneaux, on pourra avantageusement utiliser pour X un numéro court à quatre chiffres par exemple afin d'accélérer l'accès au service.

## Revendications

1. Système de diffusion d'informations complémentaires liées à au moins une affiche (11) présente sur un panneau d'affichage (10), vers un terminal mobile (20), le système étant **caractérisé en ce qu'**il comprend :
- un centre d'exploitation (30) comportant des moyens de mémorisation (31) de données d'identification relatives à une pluralité de panneaux d'affichage ainsi que, pour chaque panneau d'affichage, des données de position géographique dudit panneau d'affichage et des données d'identification de l'affiche ou des affiches présentées sur ledit panneau d'affichage ; et des moyens d'identification et de localisation d'un panneau d'affichage (10) et d'identification de l'affiche (11) ou des affiches présentée(s) sur ledit panneau d'affichage (10), à partir desdites données d'identification dudit panneau d'affichage (10) issues d'un élément d'identification (12) présent sur ledit panneau d'affichage (10) et reçues par un centre de service (40);
- un centre de service (40) comportant des moyens de réception (42) de données d'identification dudit panneau d'affichage, lesdites données d'identification étant issues d'un élément d'identification (12) présent sur le panneau d'affichage (10) et communiquées au centre de service (40) par un terminal mobile (20) via un réseau de communication (R') ; des moyens de mémorisation d'informations complémentaires relatives à une pluralité d'affiches présentées sur ladite pluralité de panneaux d'affichage et aux leur localisations géographiques ;des moyens de récupération des informations complémentaires mémorisées relatives à ladite affiche (11) identifiée par ledit centre d'exploitation (30) et présentée sur ledit panneau d'affichage (10) identifié par ledit centre d'exploitation (30) ; et des moyens de transmission (45) desdites informations complémentaires vers ledit terminal mobile (20) via ledit réseau de communication (R') ;
- le centre d'exploitation (30) et le centre de service (40) étant interconnectés, le centre de service (40) récupérant auprès du centre d'exploitation (30) lesdites données de position géographique dudit panneau d'affichage (10) et lesdites données d'identification de l'affiche (11) présentée sur ledit panneau d'affichage (10), de manière à lui permettre de récupérer, dans ses moyens de mémorisation, lesdites informations complémentaires relatives à ladite affiche (11) identifiée et présentée sur ledit panneau d'affichage (10) identifié et relatives à la localisation géographique du panneau d'affichage.

2. Système de diffusion selon la revendication 1, **caractérisé en ce que** le centre d'exploitation (30) et le centre de service (40) sont interconnectés au moyen d'un réseau de communication (R).

3. Procédé d'acquisition, par un terminal mobile (20) situé à proximité d'un panneau d'affichage (10), d'informations complémentaires liées à au moins une affiche (11) présente sur le panneau d'affichage (10), le procédé comprenant les étapes suivantes :
- acquisition (S1), par ledit terminal mobile (20), de données d'identification dudit panneau d'affichage (10), lesdites données d'identification étant issues d'un élément d'identification (12) présent sur ledit panneau d'affichage (10),
- transmission (S2), au moyen d'un réseau de communication (R', R), desdites données d'identification vers le centre de service (40) d'un système de diffusion (30, 40) selon la revendication 1, qui les transmets (S4) à un centre d'exploitation (30), lequel récupère (S5, S6), dans ses moyens de mémorisation, à partir desdites données d'identification du panneau d'affichage (10), la position géographique dudit panneau et l'identification de ladite affiche (11) présentée sur ledit panneau (10);
- récupération (S7) par le centre de service (40), dans ses moyens de mémorisation, desdites informations complémentaires associées à ladite affiche identifiée et à sa localisation géographique ; et
- réception (S8), par le téléphone mobile (20), en provenance dudit centre de service (40) dudit système de diffusion (30, 40), via ledit réseau de communication (R'), desdites informations complémentaires relatives à l'affiche (11) présentée sur ledit panneau d'affichage (10) et à sa localisation géographique.

4. Procédé selon la revendication 3, **caractérisé en ce que** les données d'identification issues de l'élément d'identification (12) sont récupérées au moyen d'une capture d'image de l'élément d'identification (12) dudit panneau d'affichage (10).

5. Procédé selon la revendication 3, **caractérisé en ce que** les données d'identification issues de l'élément d'identification (12) sont récupérées par saisie d'informations représentatives dudit élément d'identification (12), au moyen d'un clavier du terminal mobile (20).

6. Procédé selon la revendication 1ou 2, **caractérisé en ce que** les données d'identification du panneau d'affichage issues de l'élément d'identification (12) sont récupérées à partir de données géographiques du terminal mobile (20).

7. Procédé de diffusion vers un terminal mobile (20) d'informations complémentaires liées à au moins une affiche (11) présente sur un panneau d'affichage (10), le procédé comprenant les étapes suivantes :
- réception (S1), par le centre de service (40) d'un système de diffusion (30, 40) selon la revendication 1, de données d'identification dudit panneau d'affichage (10), en provenance d'un terminal mobile (20) via un réseau de communication (R'), lesdites données d'identification étant issues d'un élément d'identification (12) présent sur ledit panneau d'affichage (10), et transmission (S2) desdites données au centre d'exploitation (30) dudit système de diffusion,
- à partir des données d'identification transmises par le centre de service (40), identification et localisation (S5), par le centre d'exploitation (30) dudit système de diffusion (30, 40), dudit panneau d'affichage à partir desdites données d'identification, et identification (S6) de ladite affiche (11) présentée sur ledit panneau d'affichage (10) préalablement identifié ;
- récupération (S7), par le centre de service (40) dudit système de diffusion (30, 40), dans ses moyens de mémorisation, d'informations complémentaires associées à ladite affiche (11) identifiée et présentée sur ledit panneau d'affichage (10) préalablement identifié et relatives à la localisation géographique du panneau d'affichage ; et
- transmission (S8), par ledit centre de service (40) dudit système de diffusion (30, 40), desdites informations complémentaires associées à ladite affiche (11) et relatives à la localisation du panneau d'affichage, vers le terminal mobile (20) via ledit réseau de communication (R').

8. Procédé selon la revendication 7, **caractérisé en ce qu'**il comporte en outre une étape préalable de mémorisation consistant à enregistrer :
- dans des moyens de mémorisation (31) du centre d'exploitation (30) système de diffusion (30, 40), des données d'identification relatives à une pluralité de panneaux d'affichage et, pour chaque panneau d'affichage (10), une étape de mémorisation des données de position géographique dudit panneau d'affichage (10) et des données d'identification de l'affiche (11) présente sur ledit panneau d'affichage (10) respectif, et
- dans d'autres moyens de mémorisation du centre de service (40), des informations complémentaires correspondantes à chaque affiche identifiée.

9. Procédé selon l'une des revendications 7 à 8, **caractérisé en ce qu'**il comporte en outre une étape de personnalisation des informations complémentaires, à partir des données d'identification et de position géographique du panneau d'affichage (10).

10. Procédé selon l'une quelconque des revendications 7 à 9, **caractérisé en ce que** les informations complémentaires, stockées dans les moyens de mémorisation du centre de service (40) du système de diffusion, sont mises à jour lorsque l'affiche (11) du panneau (10) est modifiée ou remplacée.

11. Procédé selon l'une quelconque des revendications 7 à 9, **caractérisé en ce que** les données d'identification et de position géographique de chaque panneau d'affichage et les données d'identification de l'affiche présente sur chaque panneau d'affichage, stockées dans les moyens de mémorisation (31) du centre d'exploitation (30) du système de diffusion, sont mises à jour lorsque des panneaux d'affichage sont ajoutés ou enlevés.

## Patentansprüche

1. System zur Verbreitung von Zusatzinformationen im Zusammenhang mit mindestens einem auf einer Anzeigetafel (10) vorhandenen Plakat (11) hin zu einem mobilen Endgerät (20), wobei das System umfasst:
- ein Betriebszentrum (30), das Mittel (31) zur Speicherung von Identifikationsdaten, die eine Vielzahl von Anzeigetafeln betreffen, sowie für jede Anzeigetafel, der geografischen Positionsdaten der Anzeigetafel und der Identifikationsdaten des Plakats oder der Plakate umfasst, die auf der Anzeigetafel präsentiert werden; und Mittel zur Identifikation und Ortsbestimmung einer Anzeigetafel (10) und zur Identifikation des Plakats (11) oder der Plakate, das/die auf der Anzeigetafel (10) präsentiert wird/werden, ausgehend von den Identifikationsdaten der Anzeigetafel (10), die von einem Identifikationselement (12) stammen, das auf der Anzeigetafel (10) vorhanden ist, und von einem Dienstzentrum (40) empfangen werden;
- ein Dienstzentrum (40), das Mittel (42) zum Empfang von Identifikationsdaten der Anzeigetafel umfasst, wobei die Identifikationsdaten von einem Identifikationselement (12) stammen, das auf der Anzeigetafel (10) vorhanden ist, und dem Dienstzentrum (40) durch das mobile Endgerät (20) über ein Kommunikationsnetz (R`) kommuniziert werden; Mittel zur Speicherung von Zusatzinformationen, die eine Vielzahl von Anzeigen, die auf der Vielzahl von Anzeigetafeln (10) präsentiert werden, und ihre geografischen Ortsbestimmungen betreffen; Mittel zur Wiedergewinnung der gespeicherten Zusatzinformationen, die das Plakat (11) betreffen, das von dem Betriebszentrum (30) identifiziert wurde und auf der durch das Betriebszentrum (30) identifizierten Anzeigetafel (10) präsentiert wird; und Mittel zur Übertragung (45) der Zusatzinformationen hin zu dem mobilen Endgerät (20) über das Kommunikationsnetz (R');
- wobei das Betriebszentrum (30) und das Dienstzentrum (40) miteinander verbunden sind, wobei das Dienstzentrum (40) beim Betriebszentrum (30) die geografischen Positionsdaten der Anzeigetafel (10) und die Identifikationsdaten des auf der Anzeigetafel (10) präsentierten Plakats (11) wiedergewinnt, derart, dass es ihm ermöglicht wird, in seinen Speicherungsmitteln die Zusatzinformationen wiederzugewinnen, die das identifizierte und auf der identifizierten Anzeigetafel (10) präsentierte Plakat (11) betreffen und die geografische Ortsbestimmung der Anzeigetafel betreffen.

2. Verbreitungssystem nach Anspruch 1, **dadurch gekennzeichnet, dass** das Betriebszentrum (30) und das Dienstzentrum (40) mittels eines Kommunikationsnetzes (R) miteinander verbunden sind.

3. Verfahren zur Erfassung von Zusatzinformationen im Zusammenhang mit mindestens einem auf einer Anzeigetafel (10) vorhandenen Plakat (11) durch ein mobiles Endgerät (20), das sich in der Nähe der Anzeigetafel (10) befindet, wobei das Verfahren die folgenden Schritte umfasst:
- durch das mobile Endgerät (20), Erfassen (S1) von Identifikationsdaten der Anzeigetafel (10), wobei die Identifikationsdaten von einem Identifikationselement (12) stammen, das auf der Anzeigetafel (10) vorhanden ist;
- mittels eines Kommunikationsnetzes (R`, R), Übertragen (S2) der Identifikationsdaten hin zu dem Dienstzentrum (40) eines Verbreitungssystems (30, 40) nach Anspruch 1, das sie an ein Betriebszentrum (30) überträgt (S4), das in seinen Speicherungsmitteln ausgehend von den Identifikationsdaten der Anzeigetafel (10) die geografische Position der Anzeigetafel und die Identifikation des auf der Anzeigetafel (10) präsentierten Plakats (11) wiedergewinnt (S5, S6);
- durch das Dienstzentrum (40), Wiedergewinnen (S7) der Zusatzinformationen, die dem identifizierten Plakat und seiner geografischen Ortsbestimmung zugehörig sind, in seinen Speicherungsmitteln; und
- durch das Mobiltelefon (20), Empfang (S8) der Zusatzinformationen, die das auf der Anzeigetafel (10) präsentierte Plakat (11) und seine geografische Ortsbestimmung betreffen, von dem Dienstzentrum (40) des Verbreitungssystems (30, 40) über das Kommunikationsnetz (R`).

4. Verfahren nach Anspruch 3, **dadurch gekennzeichnet, dass** die Identifikationsdaten, die von dem Identifikationselement (12) stammen, mittels einer Bilderfassung des Identifikationselements (12) der Anzeigetafel (10) wiedergewonnen werden.

5. Verfahren nach Anspruch 3, **dadurch gekennzeichnet, dass** die Identifikationsdaten, die von dem Identifikationselement (12) stammen, durch Erfassung von Informationen, die für das Identifikationselement (12) repräsentativ sind, mittels einer Tastatur des mobilen Endgeräts (20) wiedergewonnen werden.

6. Verfahren nach Anspruch 1 oder 2, **dadurch gekennzeichnet, dass** die Identifikationsdaten der Anzeigetafel, die von dem Identifikationselement (12) stammen, ausgehend von geografischen Daten des mobilen Endgeräts (20) widergewonnen werden.

7. Verfahren zur Verbreitung von Zusatzinformationen im Zusammenhang mit mindestens einem auf einer Anzeigetafel (10) vorhandenen Plakat (11) hin zu einem mobilen Endgerät (20), wobei das Verfahren die folgenden Schritte umfasst:
- durch das Dienstzentrum (40) eines Verbreitungssystems (30, 40) nach Anspruch 1, Empfang (S1) von Identifikationsdaten der Anzeigetafel (10) von einem mobilen Endgerät (20) über ein Kommunikationsnetz (R`), wobei die Identifikationsdaten von einem auf der Anzeigetafel (10) vorhandenen Identifikationselement (12) stammen, und Übertragung (S2) der Daten an das Betriebszentrum (30) des Verbreitungssystems,
- ausgehend von den durch das Dienstzentrum (40) übertragenen Daten, durch das Betriebszentrum (30) des Verbreitungssystems (30, 40), Identifikation und Ortsbestimmung (S5) der Anzeigetafel ausgehend von den Identifikationsdaten und Identifikation (S6) des Plakats (11), das auf der vorhergehend identifizierten Anzeigetafel (10) präsentiert wird;
- durch das Dienstzentrum (40) des Verbreitungssystems (30, 40), in seinen Speicherungsmitteln Wiedergewinnung (S7) von Zusatzinformationen, die dem auf der vorhergehend identifizierten Anzeigetafel (10) identifizierten und präsentierten Plakat (11) zugehörig sind und die geografische Ortsbestimmung der Anzeigetafel betreffen; und
- durch das Dienstzentrum (40) des Verbreitungssystems (30, 40), Übertragen (S8) der Zusatzinformationen, die dem Plakat (11) zugehörig sind und die geografische Ortsbestimmung der Anzeigetafel betreffen, über das Kommunikationsnetz (R`) hin zu dem mobilen Endgerät (20).

8. Verfahren nach Anspruch 7, **dadurch gekennzeichnet, dass** es ferner einen vorherigen Speicherungsschritt umfasst, der darin besteht, Folgendes aufzuzeichnen:
- in den Speicherungsmitteln (31) des Betriebszentrums (30) des Verbreitungssystems (30, 40), Identifikationsdaten, die eine Vielzahl von Anzeigetafeln betreffen und, für jede Anzeigetafel (10), einen Schritt zur Speicherung der geografischen Positionsdaten der Anzeigetafel (10) und der Identifikationsdaten des auf der entsprechenden Anzeigetafel (10) vorhandenen Plakats (11), und
- in anderen Speicherungsmitteln des Dienstzentrums (40), Zusatzinformationen, die jedem identifizierten Plakat entsprechen.

9. Verfahren nach einem der Ansprüche 7 bis 8, **dadurch gekennzeichnet, dass** es ferner einen Schritt zur Personalisierung der Zusatzinformationen ausgehend von den Identifikations- und geografischen Positionsdaten der Anzeigetafel (10) umfasst.

10. Verfahren nach einem der Ansprüche 7 bis 9, **dadurch gekennzeichnet, dass** die Zusatzinformationen, die in den Speicherungsmitteln des Dienstzentrums (40) des Verbreitungssystems gespeichert sind, aktualisiert werden, wenn das Plakat (11) der Tafel (10) geändert oder ausgetauscht wird.

11. Verfahren nach einem der Ansprüche 7 bis 9, **dadurch gekennzeichnet, dass** die Identifikations- und geografischen Positionsdaten von jeder Anzeigetafel und die Identifikationsdaten des auf jeder Anzeigetafel vorhandenen Plakats, die in den Speicherungsmitteln (31) des Betriebszentrums (30) des Verbreitungssystems gespeichert sind, aktualisiert werden, wenn Anzeigetafeln hinzugefügt oder entfernt werden.

## Claims

1. A system for broadcasting additional information related to at least one poster (11) present on a display panel (10), towards a mobile terminal (20), the system comprising:
- an operating center (30) including means for storing (31) identification data relating to a plurality of display panels as well as, for each display panel, geographic position data of said display panel and identification data of the poster(s) presented on said display panel; and means for identifying and locating a display panel (10) and for identifying the poster(s) (11) presented on said display panel (10), from said identification data of said display panel (10) derived from an identification element (12) present on said display panel (10) and received by a service center (40);
- a service center (40) including means for receiving (42) identification data of said display panel, said identification data being derived from an identification element (12) present on the display panel (10) and communicated to the service center (40) by a mobile terminal (20) via a communication network (R'); means for storing additional information relating to a plurality of posters presented on said plurality of display panels (10) and their geographic locations; means for retrieving additional stored information relating to said poster (11) identified by said operating center (30) and presented on said display panel (10) identified by said operating center (30); and means for transmitting (45) said additional information towards said mobile terminal (20) via said communication network (R');
- the operating center (30) and the service center (40) being interconnected, the service center (40) retrieving from the operating center (30) said geographic position data of said display panel (10) and said identification data of the poster (11) presented on said display panel (10), so as to allow it to retrieve, in its storage means, said additional information relating to said identified poster (11) presented on said identified display panel (10) and relating to the geographic location of the display panel.

2. The broadcast system according to claim 1, **characterized in that** the operating center (30) and the service center (40) are interconnected by means of a communication network (R).

3. A method for acquiring, by a mobile terminal (20) located in the vicinity of a display panel (10), additional information related to at least one poster (11) present on the display panel (10), the method comprising the following steps:
- acquiring (S1), by said mobile terminal (20), identification data of said display panel (10), said identification data being derived from an identification element (12) present on said display panel (10),
- transmitting (S2), by means of a communication network (R', R), said identification data towards the service center (40) of a broadcast system (30, 40) according to claim 1, that transmits them (S4) to an operating center (30), which retrieves (S5, S6), in its storage means, from said identification data of the display panel (10), the geographic position of said panel and the identification of said poster (11) presented on said panel (10);
- retrieving (S7) by the service center (40), in its storage means, said additional information associated with said identified poster and geographic location thereof; and
- receiving (S8), by the mobile telephone (20), coming from said service center (40) of said broadcast system (30, 40), via said communication network (R'), said additional information relating to the poster (11) presented on said display panel (10) and to geographic location thereof.

4. The method according to claim 3, **characterized in that** the identification data derived from the identification element (12) are retrieved by means of an image capture of the element for identifying (12) said display panel (10).

5. The method according to claim 3, **characterized in that** the identification data derived from the identification element (12) are retrieved by inputting information representative of said identification element (12), by means of a keypad of the mobile terminal (20).

6. The method according to claim 1 or 2, **characterized in that** the display panel identification data derived from the identification element (12) are retrieved from geographic data from the mobile terminal (20).

7. A method for broadcasting, towards a mobile terminal (20), additional information related to at least one poster (11) present on a display panel (10), the method comprising the following steps:
- receiving (S1), by the service center (40) of a broadcast system (30, 40) according to claim 1, identification data of said panel display (10), coming from a mobile terminal (20) via a communication network (R'), said identification data being derived from an identification element (12) present on said display panel (10), and transmitting (S2) said data to the operating center (30) of said broadcast system,
- from the identification data transmitted by the service center (40), identifying and locating (S5), by the operating center (30) of said broadcast system (30, 40), said display panel from said identification data, and identifying (S6) said poster (11) presented on said previously identified display panel (10);
- retrieving (S7), by the service center (40) of said broadcast system (30, 40), in its storage means, additional information associated with said identified poster (11) presented on said previously identified display panel (10) and relating to the geographic location of the display panel; and
- transmitting (S8), by said service center (40) of said broadcast system (30, 40), said additional information associated with said poster (11) and relating to the geographic location of the display panel, towards the mobile terminal (20) via said communication network (R').

8. The method according to claim 7, **characterized in that** it further includes a prior storage step consisting in recording:
- in storage means (31) of the operating center (30) of the broadcast system (30, 40), identification data relating to a plurality of display panels and, for each display panel (10), a step of storing the geographic position data of said display panel (10) and the identification data of the poster (11) present on said respective display panel (10), and
- in other storage means of the service center (40), additional information corresponding to each identified poster.

9. The method according to any of claims 7 to 8, **characterized in that** it further includes a step of personalizing additional information, from identification data and geographic position data of the display panel (10).

10. The method according to any one of claims 7 to 9, **characterized in that** the additional information, stored in the storage means of the service center (40) of the broadcast system, are updated when the poster (11) of the panel (10) is modified or replaced.

11. The method according to any one of claims 7 to 9, **characterized in that** the identification data and the geographic position data of each display panel and the identification data of the poster present on each display panel, stored in the storage means (31) of the operating center (30) of the broadcast system, are updated when display panels are added or removed.
